# EUROPEAN PATENT APPLICATION

(11) **EP 4 764 434 A1**
(43) Date of publication of application: **24.06.2026**
(21) Application number: 24221850.1
(22) Date of filing: 19.12.2024
(51) Int. Cl.: G01J 5/04, G01J 5/061, G01J 5/0821, G01J 1/44, G01J 5/06

(54) **SINGLE-PHOTON DETECTOR**

(71) Applicant: ID Quantique S.A., 1227 Genève (CH)
(72) Inventor: BOSO, Gianluca, 1213 Petit-Lancy (CH); GAROFALO, Marc, 74160 Saint-Julien-en-Genevois (FR)
(74) Representative: Kraus & Lederer PartGmbB

(57) **Abstract**

The present invention relates to a single-photon detector (2000, 3000, 4000, 5000) comprising a package (1300) defining a closed volume (V), a cooler (1200, 1210), detecting means (1100), positioned within the closed volume (V) and configured to detect photons emitted from an optical fiber (1400), and a cold shield (2500, 3500), positioned within the closed volume (V), wherein the detecting means (1100) are positioned within the cold shield (2500, 3500).

## Description

The present invention relates to a single-photon detector with a reduced noise level.

### State of the art

Single-photon detectors, such as single-photon avalanche diodes, or SPADs, are the detector of choice in many applications related to the exploitation of quantic characteristics of photons. Known examples are quantum key distribution devices, QKD, quantum random number generators, QRNG, as well in applications requiring very precise light sensing units.

Usually, single-photon detectors are cooled down to low, preferably sub-zero, temperatures, such as in the order of -40°C, to reduce the effect of thermal noise on their measurement.

To perform this task efficiently and ease the integration of the single-photon detector into an industrial product, the single-photon detectors are generally mounted into a package in which a cooler, for instance a thermo-electric cooler, TEC, is installed to reach the desired temperature.

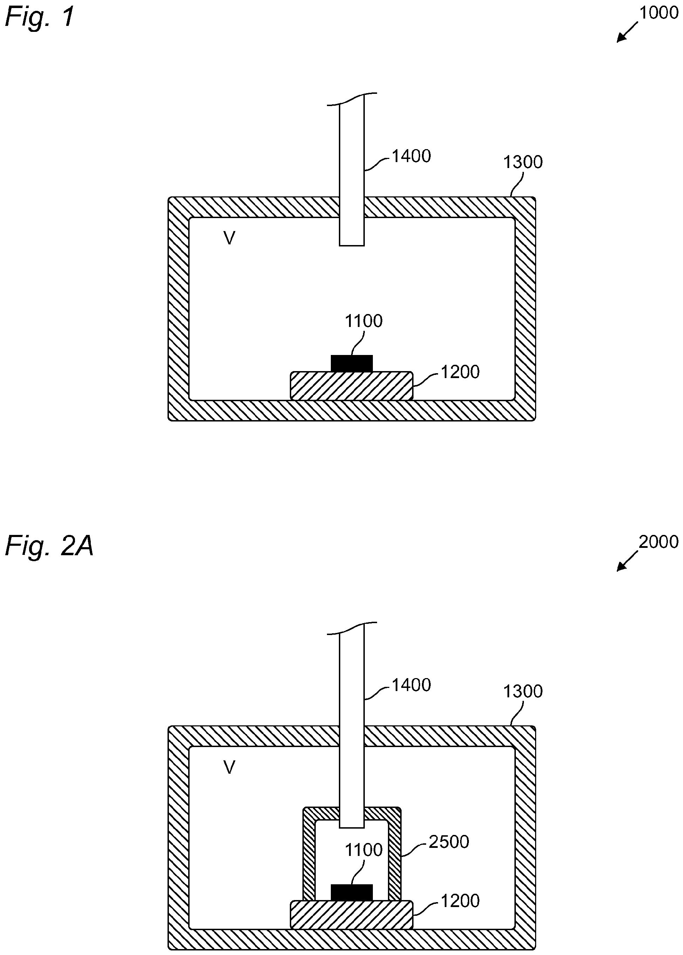

Figure 1 schematically illustrates a single-photon detector 1000 according to the state of the art. As can be seen, the single-photon detector 1000 comprises a package 1300 defining a closed volume V in which detecting means 1100 and cooler 1200 are positioned. An optical fiber 1400 is connected to the detector 1000, enabling the light from the optical fiber to reach the detecting means 1100.

Detectors having such configurations are well known and provide a simple and effective manner for cooling the detecting means 1100 to a desired temperature.

The detector 1000 is then generally mounted inside of a larger system, such as for instance a QKD receiver, that usually has to operate over an extended operating range. Commercial systems, for instance, are generally sold as being operable in a wide range of room temperatures, for instance, 5 °C to 45 °C.

In these conditions, while the detecting means 1100 are kept at a low temperature by the cooler 1200, the package 1300 itself is exposed to the room temperature. This causes it to emit a blackbody radiation which, particularly at higher room temperatures, can be erroneously detected by the detecting means 1100 as a photon from the optical fiber 1400.

This issue generally impacts all single-photon detectors having the architecture illustrated in figure 1, and it is especially problematic for some technologies of detecting means 1100. For instance, when a SPAD, fabricated in III-V or II-VI compound semiconductors, is used as detecting means 1100 for near-infrared applications, the light emitted by the package 1300 itself can generate a significant signal in this wavelength, resulting in an increase of the background noise of the detector.

There is therefore a need to develop a single-photon detector which is less impacted by this issue.

### Summary of the invention

A single-photon detector overcoming the issues highlighted above is provided by the invention, which is defined by the claims.

In accordance with an exemplary embodiment, a single-photon detector is provided comprising
a package defining a closed volume, a cooler, detecting means, positioned within the closed volume and configured to detect photons emitted from an optical fiber, a cold shield, positioned within the closed volume, wherein the detecting means are positioned within the cold shield.

In some preferred embodiments, the detecting means is in contact with the cooler.

In some preferred embodiments, the cooler separates the detecting means from the package.

In some preferred embodiments, the cold shield is in contact with the cooler.

In some preferred embodiments, the cooler is a multi-stage cooler comprising a first cooling unit and a second cooling unit, and the second cooling unit is positioned between the first cooling unit and the package.

In some preferred embodiments, the cold shield is in contact with the second cooling unit.

In some preferred embodiments, the cold shield and the detecting means are both in contact with the first cooling unit.

In some preferred embodiments, the cold shield comprises a reflecting layer.

In some preferred embodiments, the single-photon detector can further comprise a ferrule, connected to an end of the optical fiber, and a connecting element, connecting the ferrule to the cold shield.

In some preferred embodiments, the connecting element comprises one or more of a soldering, a laser soldering, a glue and a conductive glue.

In some preferred embodiments, the single-photon detector can further comprise one or more electrical connections connecting the detecting means to corresponding one or more terminals outside of the package.

In some preferred embodiments, the cold shield is configured to allow routing of the one or more electrical connections through itself, and/or between itself and the cooler, and/or between itself and the package.

In some preferred embodiments, the cooler is configured to allow routing of the one or more electrical connections through itself, and/or between itself and cold shield, and/or between itself and the package.

In some preferred embodiments, the cold shield comprises an opening for inserting the optical fiber.

### Brief description of the figures

Figure 1 schematically illustrates a single-photon detector 1000;
Figures 2A, 2B, 2C, 2D and 2E schematically illustrate alternative implementations of a single-photon detector 2000;
Figure 3 schematically illustrate a single-photon detector 3000 comprising a reflecting layer 3510;
Figure 4 schematically illustrate components of a single-photon detector 4000, focusing on the connection between an end of the fiber optic and the cold shield;
Figure 5 schematically illustrate components of a single-photon detector 5000 comprising one or more electrical connections 5610-5630.

### Detailed description of preferred embodiments

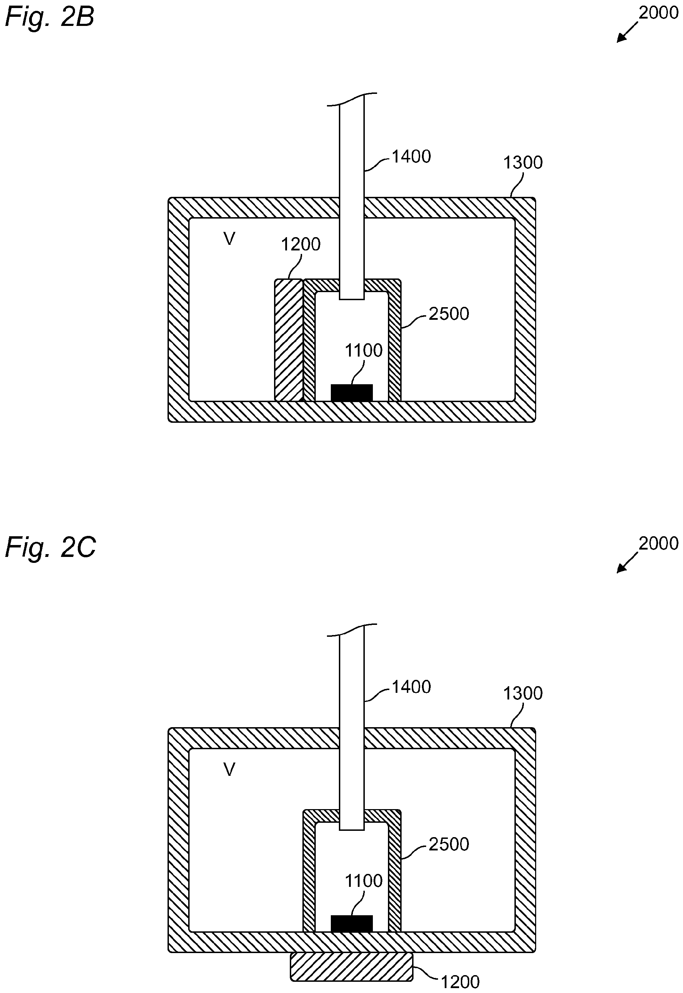

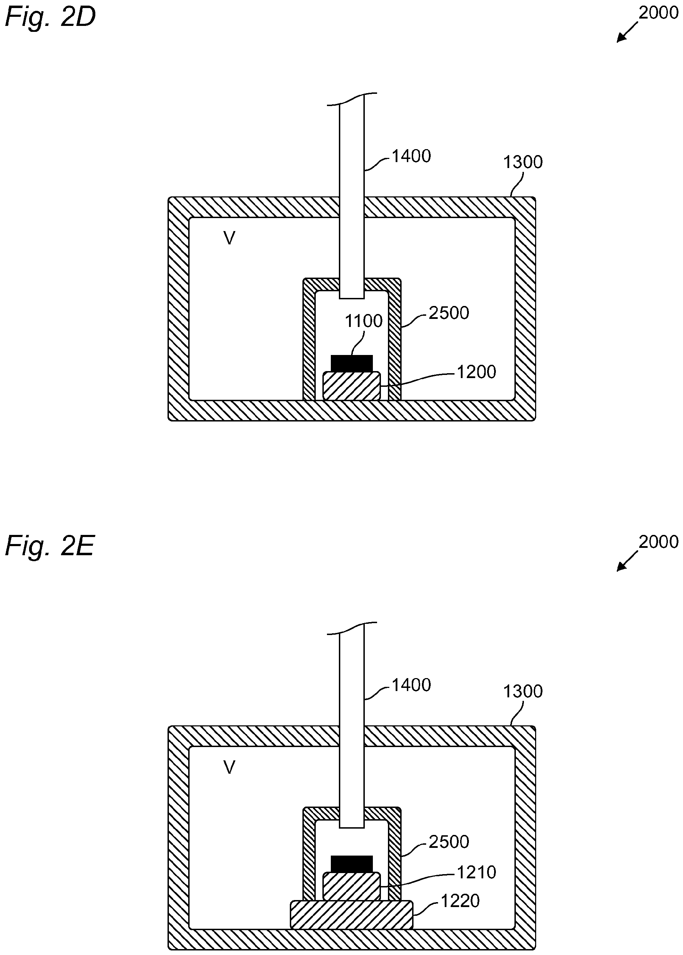

Figures 2A, 2B, 2C, 2D and 2E schematically illustrate alternative implementations of a single-photon detector 2000. As will be clear from the following, those alternative implementations differ due to the relative position of some of the components of the photon detector 2000.

As can be seen in figure 2A, single-photon detector 2000 comprises a package 1300 defining a closed volume V. In the illustrated embodiment, the package 1300 is schematically illustrated as being implemented by a single housing, surrounding volume V, with an opening for an optical fiber 1400. In preferred embodiments, the opening for the optical fiber 1400 can be the only access point to the closed volume V. That is, in preferred embodiments, the package is sealed, except for the opening for the optical fiber 1400, such that, when an optical fiber 1400 is placed in the opening, the package 1300 is completely sealed and the volume V is isolated from the volume external to the package 1300.

It will be clear to those skilled in the art that this is a schematic representation of the package 1300 and that, in practical implementation, the package 1300 could be implemented by two or more components, connected together, in a permanent or detachable manner. For instance, the package 1300 could comprise a substantially flat horizontal base and a cover, defining volume V, mounted on this base. Alternatively, or in addition, the package 1300 can also be realized as a modular assembly of multiple components, allowing for greater flexibility and customization. For example, the substantially flat horizontal base mentioned earlier could be a separate component from the cover, enabling users to easily replace or upgrade individual parts without having to modify the entire detector. Furthermore, the connection between these components can be achieved through various means, such as screws, clips, or adhesive bonding, depending on the specific requirements of the application.

Single-photon detector 2000 further comprises a cooler 1200. The cooler 1200 is generally intended to cool down one or more elements of the single-photon detector 2000. The cooler 1200 can be implemented in any known manner including, for instance, any known thermoelectric cooling device. Although not illustrated, in some embodiments the cooler 1200 could be separated from the package 1300 by a thermally insulating layer.

As will become clearer from the following description, the cooler 1200 enables the operation of detecting means 1100, which generally are implemented by sensitive photo detectors, at temperatures lower than ambient temperature, thereby enhancing their detection efficiency and reducing noise. In addition to thermoelectric cooling devices, other implementations of the cooler 1200 can include, but are not limited to, liquid nitrogen or helium cooling systems, Stirling coolers, etc.

Single-photon detector 2000 further comprises detecting means 1100, positioned within the closed volume V and configured to detect photons emitted from an optical fiber 1400 and emit an electrical signal representative of photons being detected and/or of the number of photons being detected. Any known device capable of detecting a few photons, preferably a single photon, can be implemented, such as superconducting nanowire single photon detectors, photomultipliers, Geiger counters, single-photon avalanche diodes, quantum dots, etc.

Detecting means 1100 are preferably placed in the package 1300 in such a way that they can be illuminated directly from the output of the optical fiber 1400, as schematically illustrated. It will however be clear that the invention is not limited thereto, and the light from the optical fiber 1400 could be redirected to the detecting means 1100 through one or more lens, and/or mirror, and/or waveguide, and/or beam splitter, etc.

Preferably, the detecting means 1100 are positioned so as to be in physical contact with the cooler 1200, such as illustrated in figure 2A. Further preferably, the cooler 1200 can be configured to separate the detecting means 1100 from the package 1300. That is, physical contact of the detecting means 1100 and the package 1300, which would lead to a heat transfer from the package 1300, can be prevented by use of the cooler 1200.

Both those preferred features are implemented in the embodiment of figure 2A. The invention is, however, not limited thereto.

For instance, as visible in figure 2B, the cooler 1200 can be positioned so as to cool a cold shield 2500, to be described more in details in the following, inside which the detecting means 1100. Alternatively, or in addition, as visible in figure 2C, the cooler 1200 can be positioned so as to cool a portion of package 1300 on which the detecting means 1100 are positioned, or a portion of the volume V defined by the package 1300 in which the detecting means 1100 are positioned. It will be clear that those alternatives can be combined, as a plurality of coolers 1200 can be implemented. It will also be clear that the invention is not limited to the specific configurations illustrated in figures 2A-2D, but rather encompasses any placement of the cooler 1200 such that cooler 1200 can lower the temperature of the detecting means 1100.

Single-photon detector 2000 further comprises a cold shield 2500 positioned within the closed volume V, wherein the detecting means 1100 are positioned within the cold shield 2500. Thanks to this arrangement, it is advantageously possible to prevent the black body radiation, emitted from the interior of the package 1300, from reaching the detecting means 1100. Alternatively, or in addition, the cold shield 2500 can advantageously allow a lower temperature to be maintained inside of itself, compared to the temperature in the remaining part of volume V, external to the cold shield 2500, this further improving the operation of the detecting means 1100.

While all embodiments illustrate a single cold shield, it will be clear that the invention is not limited to a single cold shield 2500, but rather multiple shields can be employed to create a nested thermal and radiation shielding structure. Additionally, the shape, size, and material properties of the cold shield 2500 can be optimized for specific applications and detector configurations to achieve optimal performance.

The cold shield 2500 can be positioned in various manner, within the package 2500, with respect to the cooler 1200.

In particular, as illustrated for instance in figure 2A, 2B and 2E, the cold shield 2500 can be placed in contact with the cooler 1200. This is particularly advantageous as it results in a cooling of the shield 2500, which reduces its black body radiation towards the detecting means 1100. Alternatively, or in addition, as visible in figure 2B, 2C and 2D, the cold shield 2500 can be placed in contact with the package 1300. This arrangement allows for heat transfer between the package 1300 and the cold shield 2500, which can help to maintain a consistent temperature within the volume V.

In some embodiments, the cooler 1200 can be placed inside of the cold shield 2500, such as visible in figure 2D or 2E. This has the advantage of reducing heat transmission from the cooler to part of the volume V outside of the cold shield 2500, thus increasing the cooling effect inside of the cold shield 2500.

Although in the embodiments described so far a cooler 1200 with a single body, or a single cooling unit, has been discussed, the invention is not limited thereto. As visible in figure 2E, in some embodiments the cooler 1200 can be a multi-stage cooler comprising a first cooling unit 1210 and a second cooling unit 1220. It will be clear to those skilled in the art that the number of cooling units is not limited to two and could be any number equal to or higher than two. Any of the features described for the cooler 1200 can be applied to any of the first cooling unit 1210 and second cooling unit 1220, and vice versa.

In some preferred embodiments with such a multi-stage cooler, as visible for instance in figure 2E, the second cooling unit 1220 can be positioned between the first cooling unit 1210 and the package 1300. This provides the beneficial advantage that the first cooling unit 1210 is cooled, with respect to the package, by the second cooling unit 1220, so that the first cooling unit 1210 can operate at a temperature lower than it otherwise would without the second cooling unit 1220.

Alternatively, or in addition, in some preferred embodiments implementing a multi-stage cooler, the detecting means 1100 can be positioned in contact with the first cooling unit 1210, as visible in figure 2E. Further alternatively, or in addition, the cold shield 2500 can be positioned in contact with the second cooling unit 1220, as visible in figure 2E. Preferably, although this is not necessary, the first cooling unit 1210 has a size smaller than the second cooling unit 1220, such that the difference in size results in sufficient space, on the second cooling unit 1220, for contacting the cold shield 2500. Thanks to the contact between the cold shield 2500 and the second cooling unit 1220, the second cooling unit 1220 can cool the cold shield, reducing the temperature of the cold shield 1250 and of the volume internal to it.

Thus, when combining several of the feature above as in the exemplary embodiment of figure 2E, it is possible for the second cooling unit 1220 to cool the cold shield 2500 and the first cooling unit 1210. The first cooling unit 1210, operating inside of the cold shield 2500, can then focus on cooling the detecting means 1100.

Alternatively, or in addition, although not illustrated, it is possible for the cold shield 2500 and the detecting means 1100 to both be in contact with the first cooling unit 1210. This provides an increased cooling effect on the cold shield 2500. Such configuration could be obtained, for instance, by placing the cold shield of figure 2E above the first cooling unit 1210, or by enlarging the size of the first cooling unit 1210 so that its sides can contact the cold shield 2500.

It has therefore been described how the various elements of single-photon detector 2000 can be placed so as to improve the operation of the detecting means 1100.

In all embodiments illustrated in figures 2A-2E, the cold shield 2500 comprises an opening for inserting the optical fiber 1400. This enables the optical fiber to directly illuminate the detecting means 2500, positioned inside of the cold shield 2500. It will however be clear that the invention is not limited thereto. Alternatively, or in addition, the cold shield 2500 could be provided with a transparent section, through which light emitted from the optical fiber 1400 can pass.

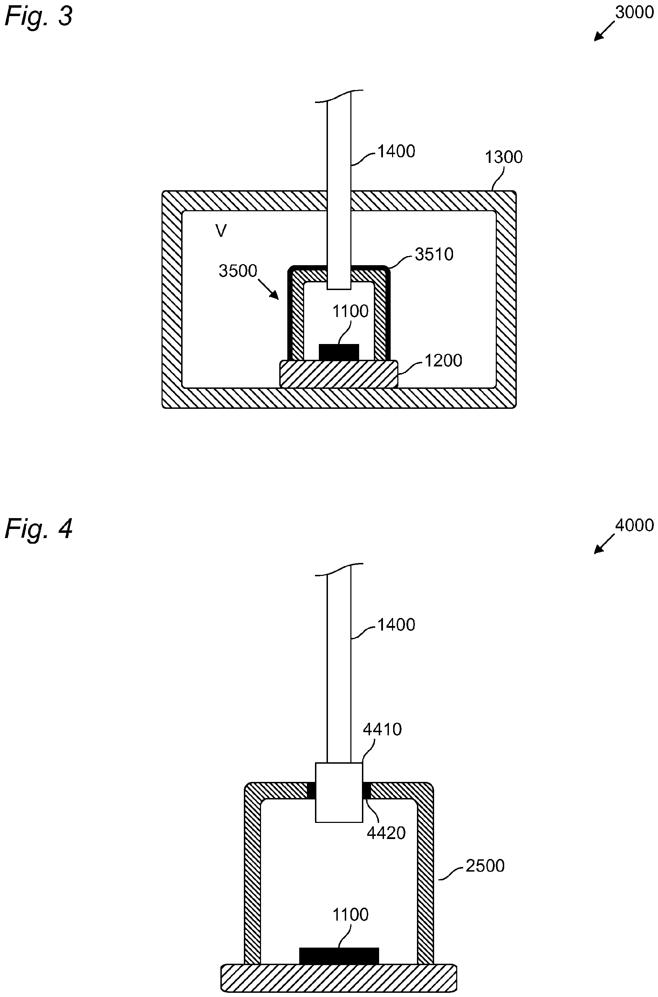

Figure 3 schematically illustrate a single-photon detector 3000. The single-photon detector 3000 differs from single-photon detector 2000 in that it comprises a reflecting layer 3510. All of the features discussed with respect to the single-photon detector 2000 can thus also be incorporated into single-photon detector 3000.

In particular, as illustrated in figure 3, the cold shield 3500 can comprises a reflecting layer 3510. The addition of the reflecting layer 3510 can advantageously enhance the ability of the cold shield 3500 to reflect radiation and maintain a stable temperature environment for the detecting means 1100. The reflecting layer 3510 can be implemented, for instance, by a thin film or a coating applied to the external surface of the cold shield 3500. Its properties, such as reflectivity, emissivity, and thickness, can be optimized to achieve the desired level of thermal radiation management.

In some further preferred embodiments, the internal surface of the cold shield 2500 or 3500 can be of a dark color, preferably black.

Figure 4 schematically illustrate components of a single-photon detector 4000, focusing on the connection between an end of the fiber optic and the cold shield. The single-photon detector 4000 differs from single-photon detector 2000, or from single-photon detector 3000, in that it provides more details on such connection. All of the features described with respect to the single-photon detector 2000 and/or 3000 can thus also be incorporated into single-photon detector 4000.

As can be seen in figure 4, single-photon detector 4000 comprises a ferrule 4410, connected to an end of the optical fiber 1400. The ferrule 4410 is inserted into the opening of cold shield 2500, previously described. In preferred embodiments, such as illustrated, a connecting element 4420 can also be implemented, which is configured to connect the ferrule to the cold shield 2500. Preferably, the connecting element 4420 can comprise one or more of a soldering, a laser soldering, a glue and a conductive glue. Even more preferably, the connecting element 4420 can have a thermal conductivity lower than 0.1 W/mK, so as to reduce hat transfer from the optical fiber 1400 to the cold shield 2500.

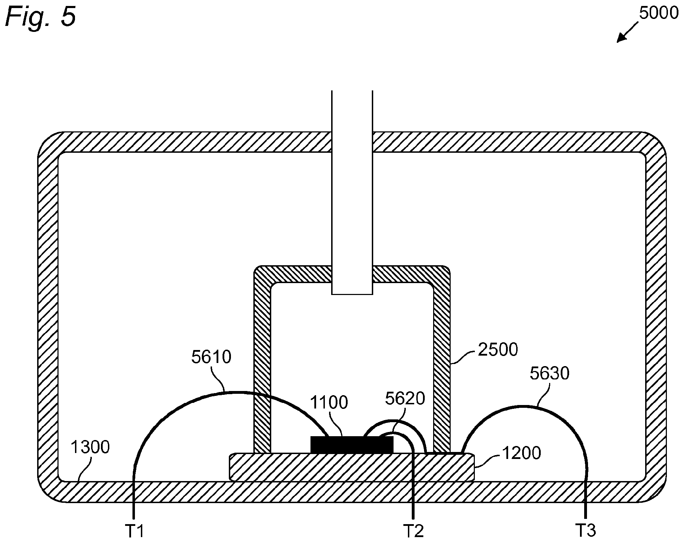

Figure 5 schematically illustrate components of a single-photon detector 5000 comprising one or more electrical connections 5610-5630. Single-photon detector 5000 differs from any of the other described single-photon detectors in that it provides more details on such electrical connections. All of the features described with respect to the single-photon detectors described above can thus also be incorporated into single-photon detector 5000.

In particular, as visible in figure 5, single-photon detector 5000 comprises one or more electrical connections 5610-5630 connecting the detecting means 1100 to corresponding one or more terminals T1-T3, which are positioned outside of the package 1300. Although each of those electrical connections are schematically illustrated as a single component, it will be clear to those skilled in the art that an electrical connection can be implemented by electrically connecting together a plurality of conductive elements.

The electrical connections 5610-5630 are schematically illustrated with three different routing options.

In particular, the cold shield 2500 can be configured to allow routing of the one or more electrical connections 5610-5630 through itself, such as is the case for electrical connection 5610. This can be achieved, for instance, by providing a hole in the cold shield, or by providing an electrically conductive portion in the cold shield, which can then be connected to an electrical connection outside of the cold shield and inside of the cold shield.

Alternatively, or in addition, the cold shield 2500 can be configured to allow routing of the one or more electrical connections 5610-5630 between itself and the cooler 1200, such as is the case for electrical connection 5630. This can be achieved, for instance, by providing a slit, or a hole, at the portion of the cold shield 2500 facing the cooler 1210.

Alternatively, or in addition, the cold shield 2500 can be configured to allow routing of the one or more electrical connections 5610-5630 between itself and the package 1300. This can be achieved in a manner analogous to electrical connection 5620 as described above, where the cold shield 2500 is in contact with the package 1300 instead of the cooler 1210. Thus, said slit or hole can be provided at the portion of the cold shield 2500 facing the package 1300.

Alternatively, or in addition, the cooler 1200 can be configured to allow routing of the one or more electrical connections 5610-5630 through itself such as is the case for electrical connection 5620. This can be achieved, for instance, by providing a hole in the cooler 1200, or by providing an electrically conductive portion in the cooler, which can then be connected to electrical connections on two opposite sides of the cold shield.

Alternatively, or in addition, the cooler 1200 can be configured to allow routing of the one or more electrical connections 5610-5630 between itself and cold shield 2500. This can be achieved in a manner analogous to electrical connection 5620 as described above. Thus, said slit or hole can be provided at the portion of the cooler 1210 facing the cold shield 2500.

While the embodiments above have been described and illustrated with a plurality in each embodiment, not all of those features need to be necessarily implemented together for the mere fact that they have been described, or illustrated, together. To the contrary, it will be clear to the skilled person that any of the features described above can be implemented in combination with any other feature described above, even if described indifferent embodiments.

### List of reference numerals

1000: single-photon detector
1100: detecting means
1200: cooler
1210, 1220: cooling unit
1300: package
1400: optical fiber
V: volume
2000: single-photon detector
2500: cold shield
3000: single-photon detector
3500: cold shield
3510: reflecting layer
4000: single-photon detector
4410: ferrule
4420: connecting element
5000: single-photon detector
5610-5630: electrical connection

## Claims

1. A single-photon detector (2000, 3000, 4000, 5000) comprising
a package (1300) defining a closed volume (V),
a cooler (1200),
detecting means (1100), positioned within the closed volume (V) and configured to detect photons emitted from an optical fiber (1400),
a cold shield (2500, 3500), positioned within the closed volume (V),
wherein the detecting means (1100) are positioned within the cold shield (2500, 3500).

2. The single-photon detector (2000, 3000, 4000, 5000) according to claim 1,
wherein the detecting means (1100) is in contact with the cooler (1200).

3. The single-photon detector (2000, 3000, 4000, 5000) according to claim 2,
wherein the cooler (1200) separates the detecting means (1100) from the package (1300).

4. The single-photon detector (2000, 3000, 4000, 5000) according to any previous claim,
wherein the cold shield (2500, 3500) is in contact with the cooler (1200).

5. The single-photon detector (2000, 3000, 4000, 5000) according to any previous claim, wherein
the cooler (1200) is a multi-stage cooler comprising a first cooling unit (1210) and a second cooling unit (1220), and
the second cooling unit (1220) is positioned between the first cooling unit (1210) and the package (1300).

6. The single-photon detector (2000, 3000, 4000, 5000) according claim 5,
wherein the cold shield (2500, 3500) is in contact with the second cooling unit (1220).

7. The single-photon detector (2000, 3000, 4000, 5000, 5000) according claim 5,
wherein the cold shield (2500, 3500) and the detecting means (1100) are both in contact with the first cooling unit (1210).

8. The single-photon detector (3000) according to any previous claim,
wherein the cold shield (3500) comprises a reflecting layer (3510).

9. The single-photon detector (4000) according to any previous claim, further comprising
a ferrule (4410), connected to an end of the optical fiber (1400), and
a connecting element (4420), connecting the ferrule to the cold shield (2500, 3500).

10. The single-photon detector (4000) according claim 9,
wherein connecting element (4420) comprises one or more of a soldering, a laser soldering, a glue and a conductive glue.

11. The single-photon detector (5000) according to any previous claim, further comprising one or more electrical connections (5610-5630) connecting the detecting means (1100) to corresponding one or more terminals (T1-T3) outside of the package (1300).

12. The single-photon detector (5000) according claim 11,
wherein the cold shield (2500, 3500) is configured to allow routing of the one or more electrical connections (5610-5630)
- through itself, and/or
- between itself and the cooler (1200), and/or
- between itself and the package (1300).

13. The single-photon detector (5000) according claim 11 or 12,
wherein cooler (1200) is configured to allow routing of the one or more electrical connections (5610-5630)
- through itself, and/or
- between itself and cold shield (2500, 3500).

14. The single-photon detector (2000, 3000, 4000, 5000) according to any previous claim,
wherein the cold shield (2500, 3500) comprises an opening for inserting the optical fiber (1400).
